# EUROPEAN PATENT SPECIFICATION

(11) **EP 3 533 577 B1**
(45) Date of publication and mention of the grant of the patent: **12.08.2020**
(21) Application number: 19156388.1
(22) Date of filing: 11.02.2019
(51) Int. Cl.: B29B 17/02, B07C 7/00, B65F 1/00

(54) **PROCESS FOR COLLECTING PLASTIC MATERIALS AND FOR RECYCLING SAID MATERIALS IN A SUPPLY CHAIN**
VERFAHREN ZUR SAMMLUNG VON KUNSTSTOFFMATERIALIEN UND ZUR WIEDERVERWERTUNG DIESER MATERIALIEN IN EINER LIEFERKETTE
PROCÉDÉ DE COLLECTE DE MATIÈRES PLASTIQUES ET DE RECYCLAGE DE CES MATIÈRES DANS UNE CHAÎNE D'APPROVISIONNEMENT

(30) Priority: 02.03.2018 IT 201800003245
(43) Date of publication of application: 04.09.2019
(73) Proprietor: Frigo, Mauro, 36021 Barbarano Vicentino (VI) (IT)
(72) Inventor: FRIGO, Mauro, 36021 Barbarano Vicentino (VI) (IT); BACCO, Paolo, 36020 Albettone (VI) (IT)
(74) Representative: Burchielli, Riccardo

(56) References cited:
- EP-A2- 1 967 294
- US-A- 5 630 493
- US-A1- 2016 001 297

## Description

This invention relates to a method and/or process for collecting plastic materials, which can be subsequently processed for their recycling and re-use.

More in detail, the invention relates to a process for collecting polypropylene and/or polyethylene(PP, LLDPE, LDPE, PLT), which defines precisely the timing, technical equipment and operational methods for the collection operations and for the successive steps for separating, processing the various types of waste and making new products starting from those collected, re-introducing them into the original production chain. The invention also comprises technologically advanced activities for the planning and management of the collection of plastic materials by the user.

The purpose and aims of the invention, which are organized in the form of a protocol, are to establish a process which becomes a procedural and process standard for the collection of a type of waste (plastic materials), which, currently, due to its fractional nature, is not managed in an adequate and consistent manner for safeguarding the environment. Thanks to this protocol, the coordinated and circular activities provided therein are, on the contrary, in line with ISO 14040:2006 regarding the lifecycle of a product; in particular, these standards are designed to help quantify, interpret and assess the environmental impacts of a specific product or service, during the entire period of its life, in which the assessment includes the entire lifecycle of the product, comprising the extraction and processing of raw materials, as well as the manufacture, transport, distribution, use, re-use, recycling and final disposal of the product.

The international reference standards for the performance of the LCA studies are represented by the following ISO standards of the 14040 series:
- ISO 14040:2006 - Environmental management - Life cycle assessment - Principles and framework;
- ISO 14044:2006 - Environmental management - Life cycle assessment - Requirements and guidelines;
- ISO 14064:2006 - Specification with guidance at the organization level for quantification and reporting of greenhouse gas emissions and removals - Validation or verification processes.

A direct consequence of the lifecycle assessment is the Environmental Product Declaration (EPD), a voluntary product certification scheme, which originated in Sweden but has international validity, developed for application of ISO 14025:2006 "Environmental labels and declarations - Type III environmental declarations - Principles and procedures"; this declaration contains the requirements and, therefore, the methods and contents of the EPD system.

This protocol makes use of innovative collection activities and procedures and individual traditional activities, which are implemented for the processing of plastic material waste, in order to achieve its re-use and recycling, but it takes on a specific value since innovative circular economy methods and instruments are defined for the first time relative to the collection phase for the various types of plastic materials (the most critical phase, since it is subdivided), involving all the participants in the life of these products, starting from the manufacturers, to the users, to the retailers, to the firms or individual parties who can re-use the by-products made with the new processing and/or with the recycling of the plastic materials collected. A process for collecting plastic waste is for example known from document US 5 630 494 A.

The problem to be resolved with this type of process, which is organized in a standard protocol, is that of implementing the collection of products, such as plastic materials, which, in terms of quantity, constitute one of the most widely consumed products in the world, in order to return them to the original production chain.

In fact, at the end of their lifecycle the majority of products made from plastic materials are disposed of more often than not in landfill sites, as it is not possible to activate an efficient collection and recycling process.

The problem is so serious that it is necessary to urgently find a solution for the complete recycling and re-use of the above-mentioned plastic materials, in view of the fact that the quantities of these materials, in Italy and abroad, is dreadfully high.

The problem is well known, but a standard protocol does not currently exist which is economically valid for the collection and complete recycling of the above-mentioned plastic materials.

The current situation therefore sees extremely few manufacturers active in the collection of plastic waste and objects; it should also be noted that firms specialized in waste collection do not assign or cannot assign activities directly and specifically for the processing of this specific type of waste, with a consequent serious damage to the environment and further waste of energy in new plastic objects without re-using recycled plastic. The aim of the invention is therefore to overcome the above-mentioned technical and environmental drawbacks and, in particular, define a process, which is organized in a true and proper standard protocol, which allows an easy and organized collection of plastic material, then employing a sequence of successive processes for the re-use and recycling of the plastic material, thereby creating a virtuous circle.

Advantageously, the invention relates to a protocol which defines precisely the timing, technical equipment and operational methods for each single step and which controls the process in question and, in particular, for the collection and for the separation of the various types of plastic waste; the invention also comprises technologically advanced activities in the planning and management of the separate collection of plastic waste, in such a way as to create a virtuous relationship between the manufacturer and the end user, as well as an expansion and improvement of the actions aimed at safeguarding the environment, since a significant advantage is achieved in terms of less use, consumption and production of "virgin" raw materials.

In particular, the collection process, which, according to the invention, is organized in a standard protocol in line with ISO 14040:2006, comprises a step for collecting plastic material, such as polyethylene and/or polypropylene (PP, LLDPE, LDPE, PLT), which is disposed of by the customer inside a series of containers installed near or inside sales outlets of items pertaining to the same type as those to be disposed of.

More specifically, if, for example, a collection of plastic materials used for making jars, bowls or flower pots is set up, a series of containers for collecting these jars, bowls or pots to be disposed of could be installed near or inside florists, household goods and furnishing accessory shops, and/or garden centers.

In this way, the customer, who has purchased a jar or other similar product made of plastic material and who has the intention of disposing of the product (due to an erroneous purchase, a change of idea and/or obsolescence of the product), may place the above-mentioned product inside a special container near the above-mentioned sales outlet and/or retailers; in particular, the containers are divided by type of materials and/or colors of the plastic materials from which the products are made, whilst each product has a QR code containing the technical features and specifications of the plastic material, which may be read by a reader placed near to the containers, so that the customer is helped in placing the product in the correct container.

According to preferred but non-limiting embodiments of the invention, in order to achieve a profitable recycling of the materials, three different containers can be used, in which it is possible to place different types of products made of different materials and colors, such as, respectively, products made of PP, LLDPE and LDPE/PLT and divided into white, light colored and dark colored products.

According to further preferred embodiments of the invention, a screen is installed either above or to the side of the zone where the containers are installed for the collection of products made of plastic materials to show a video of the history of the product placed in the containers, from the collection to the relocation and recycling in the original production chain, until the new re-use, so as to demonstrate to the customer the total recycling (100%) of the obsolete product, which is transformed in a short time into a new product, by means of a step for recycling in prior art transformation machines.

The taking back of the products and the collection of the products inside respective containers can also be economically advantageous for the customers, who, when taking the item back to the sales outlets, can acquire coupons from the same sales outlet and/or can also have the right to change the item (in the case of a short period of time from the purchase of the product and in the presence of the sales receipt).

The process also allows sponsorship of the sales outlet where the collection containers are installed, since the customer who uses the containers is encouraged to make further purchases at the sales outlet, in the full knowledge of the possible complete recycling of the single products purchased and having an economic return in the form of coupons and/or the possibility to return products purchased erroneously.

The plastic materials of the products, such as jars and/or pots, placed in the above-mentioned containers are, lastly, re-used by the firm which installed the containers for the production of new jars and-or pots after the grinding and transformation of the plastic material collected; basically, the material can be immediately recycled according to precise methods for re-use in the production chain of the material collected, with relative digital coding.

The features of the process for collecting plastic materials, according to the invention, are clear from the above-mentioned description, as are the advantages.

Lastly, the components used, providing they are compatible with the specific use, as well as the dimensions, may vary according to requirements and the state of the art.

Where the characteristics and the techniques mentioned in the following claims are followed by reference signs, the reference signs have been used only with the aim of increasing the intelligibility of the claims themselves and, consequently, the reference signs do not constitute in any way a limitation to the interpretation of each element identified, purely by way of example, by the signs numbers.

## Claims

1. Process for collecting plastic materials, said process providing for a step of collecting products made of plastic material inside a plurality of containers installed near or inside outlets, said containers being subdivided by types and colors of plastic materials of which said products are made, **characterised in that** a video display screen is installed near to said containers, showing the lifecycle of ech product inserted in said containers, from collection to recycling and to re-use of said product.

2. Process according to claim 1, **characterized in that** said products include pots, bowls, boxes and/or gardening accessories made in polypropylene and/or polyethylene and **in that** said outlets include florists, house-ware shops, garden furniture, objects and furnishings and/or garden centers.

3. Process according to at least one of the previous claims, **characterized in that** each product has a QR code containing some technical features and specifications of the plastic material of which the product is made, said QR code being readable by a reader placed near to said containers, so as to make a correct collection of the plastic materials in said containers provided for said collection.

4. Process according to at least one of the previous claims, **characterized in that** said plastic materials to be collected inside said containers are made of polypropylene and/or polyethylene, in particular PP, LLDPE and LDPE/PLT, and are subdivided in white products, light colored products and dark colored products.

5. Process according to at least one of the previous claims, **characterized in that** said outlets provide for giving coupons and/or for replacing products already purchased for each product that is collected inside said containers.

6. Process according to at least one of the previous claims, **characterized in that** said plastic materials collected inside said containers are re-used for making new products following grinding and transformation steps, so that said materials can be immediately recycled according to prefixed methods.

## Patentansprüche

1. Prozess zum Sammeln von Kunststoffen, wobei das Verfahren einen Schritt des Sammelns von aus Kunststoff hergestellten Produkten innerhalb einer Vielzahl von Behältern, die in der Nähe oder innerhalb von Auslässen installiert sind, bereitstellt, wobei die Behälter nach Arten und Farben der Kunststoffe, aus denen die Produkte hergestellt sind, unterteilt sind, **dadurch gekennzeichnet, dass** ein Video-Bildschirm in der Nähe der Behälter installiert ist, der den Lebenszyklus jedes in die Behälter eingeführten Produktes von der Sammlung bis zum Recycling und zur Wiederverwendung des Produktes zeigt.

2. Prozess nach Anspruch 1, **dadurch gekennzeichnet, dass** die Produkte Töpfe, Schüsseln, Boxen und/oder Gartenzubehör aus Polypropylen und/oder Polyethylen einschließen und dass die Sammelstellen Floristen, Haushaltswarengeschäfte, Gartenmöbel, Objekte und Einrichtungsgegenstände und/oder Gartenzentren umfassen.

3. Verfahren nach mindestens einem der vorstehenden Ansprüche, **dadurch gekennzeichnet, dass** jedes Produkt einen QR-Code aufweist, der einige technische Merkmale und Spezifikationen des Kunststoffmaterials enthält, aus dem das Produkt hergestellt ist, wobei der QR-Code durch ein Lesegerät lesbar ist, das in der Nähe der Behälter angeordnet ist, um eine korrekte Sammlung der Kunststoffe in den für die Sammlung vorgesehenen Behältern durchzuführen.

4. Prozess nach mindestens einem der vorstehenden Ansprüche, **dadurch gekennzeichnet, dass** die in den Behältern zu sammelnden Kunststoffe aus Polypropylen und/oder Polyethylen, insbesondere PP, LLDPE und LDPE/PLT, hergestellt und in weiße Produkte, helle Produkte und dunkle Produkte unterteilt werden.

5. Prozess nach mindestens einem der vorstehenden Ansprüche, **dadurch gekennzeichnet, dass** die genannten Sammelstellen die Ausgabe von Gutscheinen und/oder den Ersatz bereits gekaufter Produkte für jedes Produkt bereitstellen, das in den genannten Behältern gesammelt wird.

6. Prozess nach mindestens einem der vorstehenden Ansprüche, **dadurch gekennzeichnet, dass** die in den Behältern gesammelten Kunststoffe nach Zerkleinerungs- und Umwandlungsschritten zur Herstellung neuer Produkte wiederverwendet werden, so dass diese Materialien sofort nach festgelegten Verfahren recycelt werden können.

## Revendications

1. Procédé de collecte de matières plastiques, ledit procédé prévoyant une étape de collecte de produits réalisés en matière plastique à l'intérieur d'une pluralité de contenants installés près ou à l'intérieur de boutiques, lesdits contenants étant divisés par types et couleurs de matières plastiques qui constituent lesdits produits, **caractérisé en ce qu'**un écran vidéo est installé près desdits contenants, montrant le cycle de vie de chaque produit inséré dans lesdits contenants, de leur collecte à leur recyclage ou à leur réutilisation.

2. Procédé selon la revendication 1, **caractérisé en ce que** lesdits produits incluent des pots, des bols, des boîtes et/ou des accessoires de jardinage réalisés en polypropylène et/ou en polyéthylène et **en ce que** lesdites boutiques incluent des fleuristes, des magasins de bricolage, des magasins d'ameublement de jardin, de ventes d'objets et de meubles et/ou des centres de jardinage.

3. Procédé selon au moins une des revendications précédentes, **caractérisé en ce que** chaque produit dispose d'un QR Code contenant certaines caractéristiques techniques et spécifications de la matière plastique dont est constitué le produit, ledit QR Code étant lisible par un lecteur placé près desdits contenants, de façon à effectuer une collecte correcte des matières plastiques dans lesdits contenants prévus pour ladite collecte.

4. Procédé selon au moins une des revendications précédentes, **caractérisé en ce que** lesdites matières plastiques à collecter dans lesdits contenants sont constituées de polypropylène et/ou de polyéthylène, en particulier de PP, LLDPE et LDPE/PLT et sont divisées en produits blancs, produits de couleur claire et produits de couleur foncée.

5. Procédé selon au moins une des revendications précédentes, **caractérisé en ce que** lesdites boutiques prévoient de donner des bons et/ou de remplacer des produits déjà achetés pour chaque produit qui est collecté dans lesdits contenants.

6. Procédé selon au moins une des revendications précédentes, **caractérisé en ce que** lesdites matières plastiques collectées dans lesdits contenants sont réutilisées pour fabriquer de nouveaux produits, en suivant des étapes de broyage et de transformation, de sorte que lesdites matières puissent être immédiatement recyclées selon des procédés préétablis.
